# EUROPEAN PATENT SPECIFICATION

(11) **EP 4 145 439 B1**
(45) Date of publication and mention of the grant of the patent: **26.08.2026**
(21) Application number: 21796145.7
(22) Date of filing: 13.04.2021
(51) Int. Cl.: G10G 1/04, G10H 1/00, G06N 3/0455, G06N 3/0895

(54) **INFORMATION PROCESSING METHOD, INFORMATION PROCESSING DEVICE, AND PROGRAM**
INFORMATIONSVERARBEITUNGSVERFAHREN, INFORMATIONSVERARBEITUNGSVORRICHTUNG UND PROGRAMM
PROCÉDÉ DE TRAITEMENT D'INFORMATIONS, DISPOSITIF DE TRAITEMENT D'INFORMATIONS ET PROGRAMME

(30) Priority: 01.05.2020 JP 2020081493
(43) Date of publication of application: 08.03.2023
(73) Proprietor: Sony Group Corporation, Tokyo 108-0075 (JP)
(72) Inventor: AKAMA, Taketo, Tokyo 141-0022 (JP)
(74) Representative: 2SPL Patentanwälte PartG mbB
(86) International application number: PCT/JP2021/015318
(87) International publication number: WO 2021/220797

(56) References cited:
- EP-B1- 3 311 383
- JP-A- 2020 003 535
- US-A1- 2020 066 240
- GA\"ETAN HADJERES ET AL: "DeepBach: a Steerable Model for Bach chorales generation", ARXIV.ORG, CORNELL UNIVERSITY LIBRARY, 201 OLIN LIBRARY CORNELL UNIVERSITY ITHACA, NY 14853, 3 December 2016 (2016-12-03), XP080736572
- GAETAN HADJERES; FRANCOIS PACHET: "DeepBach: a Steerable Model for Bach chorales generation", ARXIV.ORG, CORNELL UNIVERSITY LIBRARY, 201 OLIN LIBRARY CORNELL UNIVERSITY ITHACA, NY 14853, 3 December 2016 (2016-12-03), 201 Olin Library Cornell University Ithaca, NY 14853 , XP080736572
- SANG-GIL LEE; UIWON HWANG; SEONWOO MIN; SUNGROH YOON: "Polyphonic Music Generation with Sequence Generative Adversarial Networks", ARXIV.ORG, CORNELL UNIVERSITY LIBRARY, 201 OLIN LIBRARY CORNELL UNIVERSITY ITHACA, NY 14853, 31 October 2017 (2017-10-31), 201 Olin Library Cornell University Ithaca, NY 14853 , XP081105840
- HAO-WEN DONG; WEN-YI HSIAO; LI-CHIA YANG; YI-HSUAN YANG: "MuseGAN: Multi-track Sequential Generative Adversarial Networks for Symbolic Music Generation and Accompaniment", ARXIV.ORG, CORNELL UNIVERSITY LIBRARY, 201 OLIN LIBRARY CORNELL UNIVERSITY ITHACA, NY 14853, 24 November 2017 (2017-11-24), 201 Olin Library Cornell University Ithaca, NY 14853 , XP081733499

## Description

### Field

The present disclosure relates to an information processing method, an information processing device, and a program.

### Background

For example, Patent Literature 1 discloses a technique for generating sequence information for automatic generation of a music program or the like. Patent Literature 2 discloses a method and apparatus for music generation, which may include steps of receiving length of input, recognizing pitches and rhythm of the input, generating a first segment of a full music, generating segments other than the first segment to complete the full music, generating connecting notes, chords, and beats of the segments of the full music and handling anacrusis, and generating instrument accompaniment for the full music. Patent Literature 3 discloses a music system applicable to a system and methodology for contextual synchronization of sections or slices of a digital audio track relative to real-world events. The sections are characterized in terms of a user-perception and/or machine-based evaluation that categorizes each audio section in terms of a perceived "theme" as suggested to the user or machine by an underlying rhythm or beat detected or otherwise identified within the audio section.

### Citation List

### Patent Literature

Patent Literature 1: JP 2002-207719 A
Patent Literature 2: US 2020/0066240 A1
Patent Literature 3: EP 3 311 383 B1

### Summary

### Technical Problem

It is also conceivable to automatically generate music itself. For example, it is conceivable to use a track using a certain musical instrument as an input track and newly generate another track from the input track. In this case, the generated track is desirably a track whose consistency is increased so as to cooperate with the input track. The same applies to generation of various information other than music (for example, generation of a translation or the like).

An object of one aspect of the present disclosure is to provide an information processing method, an information processing device, and a program capable of generating a track having increased consistency with an input track.

### Solution to Problem

An information processing method according to one aspect of the present disclosure includes generating an output track by using an input track including a plurality of first information elements provided over a certain period or a certain section and a learned model, wherein the output track includes a first track that is a same track as the input track or a changed track, and a second track including a plurality of second information elements provided over the certain period or the certain section, and the learned model is a learned model generated by using training data so as to output output data corresponding to the output track when input data corresponding to the first track is input.

An information processing device according to one aspect of the present disclosure includes a generation unit that generates an output track by using an input track including a plurality of first information elements provided over a certain period or a certain section and a learned model, wherein the output track includes a first track that is a same track as the input track or a track in which a part of the input track has been changed, and a second track including a plurality of second information elements provided over the certain period or the certain section, and the learned model is a learned model generated by using training data so as to output output data corresponding to the output track when input data corresponding to the first track is input.

A program according one aspect of the present disclosure causes a computer to function, the program causing the computer to execute generating an output track by using an input track including a plurality of first information elements provided over a certain period or a certain section and a learned model, wherein the output track includes a first track that is a same track as the input track or a track in which a part of the input track has been changed, and a second track including a plurality of second information elements provided over the certain period or the certain section, and the learned model is a learned model generated by using training data so as to output output data corresponding to the output track when input data corresponding to the first track is input.

### Brief Description of Drawings

FIG. 1 is a diagram illustrating an example of an appearance of an information processing device according to an embodiment.
FIG. 2 is a diagram illustrating an example of an input screen of the information processing device.
FIG. 3 is a diagram illustrating an example of an output screen of the information processing device.
FIG. 4 is a diagram illustrating an example of functional blocks of the information processing device.
FIG. 5 is a diagram illustrating an example of a first track.
FIG. 6 is a diagram illustrating an example of the first track.
FIG. 7 is a diagram illustrating an example of the first track.
FIG. 8 is a diagram illustrating an example of a correspondence relationship between an input token and a token sequence.
FIG. 9 is a diagram illustrating an example of an additional token.
FIG. 10 is a diagram illustrating an example of functional blocks of a learned model.
FIG. 11 is a diagram illustrating an example of an outline of token sequence generation by the learned model.
FIG. 12 is a diagram illustrating an example of an output track.
FIG. 13 is a diagram illustrating an example of the output track.
FIG. 14 is a diagram illustrating an example of the output track.
FIG. 15 is a flowchart illustrating an example of processing (information processing method) executed in the information processing device.
FIG. 16 is a flowchart illustrating an example of generation of the learned model.
FIG. 17 is a diagram illustrating an example of a hardware configuration of an information processing device.

### Description of Embodiments

Hereinafter, embodiments of the present disclosure will be described in detail with reference to the drawings. Note that in each of the following embodiments, the same parts are denoted by the same reference numerals, and redundant description will be omitted.

The present disclosure will be described according to the following order of items.
1. Embodiment
   1.1 Example of Configuration of Information Processing Device
   1.2 Example of Processing (Information Processing Method) Executed in Information Processing Device
   1.3 Example of Generation of Learned Model
   1.4 Example of Hardware Configuration
2. Modification Example
3. Effects

### 1. Embodiment

### 1.1 Example of Schematic Configuration of Information Processing Device

Hereinafter, an information processing device that can be used in an information processing method according to an embodiment will be mainly described as an example. The information processing device according to the embodiment is used as an information generation device that generates various types of information. Information to be handled is referred to as a "track". The track includes a plurality of information elements provided over a certain period or a certain section. The information element is sound information of a musical instrument. Examples of the sound information include a pitch value of sound, a generation period of sound, and the like. The track may indicate the sound of the musical instrument at each time during the certain period.

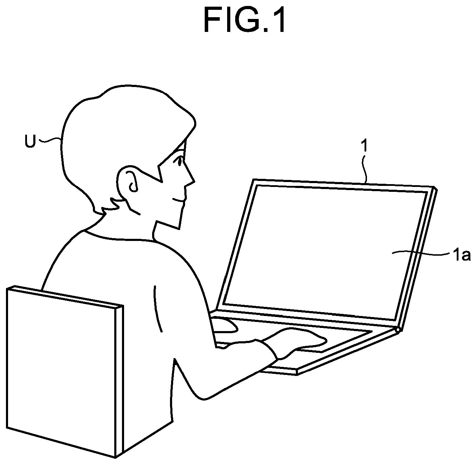

FIG. 1 is a diagram illustrating an example of an appearance of an information processing device according to an embodiment. The information processing device 1 is implemented by causing a general-purpose computer to execute a predetermined program (software), for example. In the example illustrated in FIG. 1, the information processing device 1 is a laptop used by a user U. A display screen of the information processing device 1 is referred to as a display screen 1a in the drawing. In addition to the laptop, the information processing device 1 can be implemented by various devices such as a PC and a smartphone.

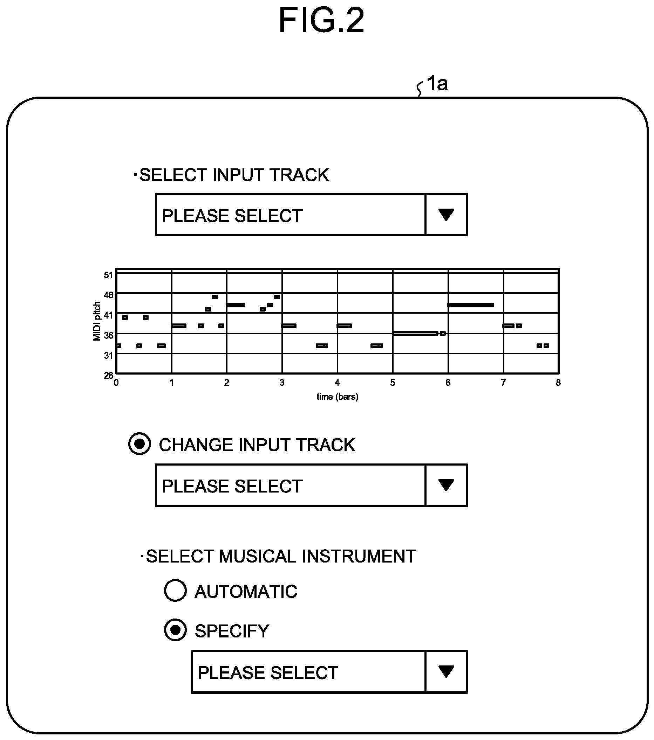

FIG. 2 is a diagram illustrating an example of an input screen of the information processing device. In the item "input track selection", the user U selects an input track. The input track is sound information (pitch value of sound, generation period of sound, and the like) of the musical instrument (first musical instrument) at each time during a certain period. Any musical instrument including a base, a drum, and the like may be the first musical instrument. The user U selects the input track, for example, by specifying data (MIDI file or the like) corresponding to the input track. Information visualizing the selected input track is displayed under the item "input track selection".

In the item "change input track", the user U selects whether or not to make a change to the input track, and also selects the degree of change (change amount) when making a change. An example of the change amount is a ratio (%) of the sound information to be changed. The change amount may be selected from a plurality of numerical values prepared in advance, or may be directly input by the user U1. Specific contents of the change will be described later.

In the item "musical instrument selection", the user U selects a musical instrument (second musical instrument) to be used for a newly generated track. The second musical instrument may be automatically selected or specified by the user U. Like the first musical instrument described above, any musical instrument may be the first musical instrument. The type of the second musical instrument may be the same as the type of the first musical instrument.

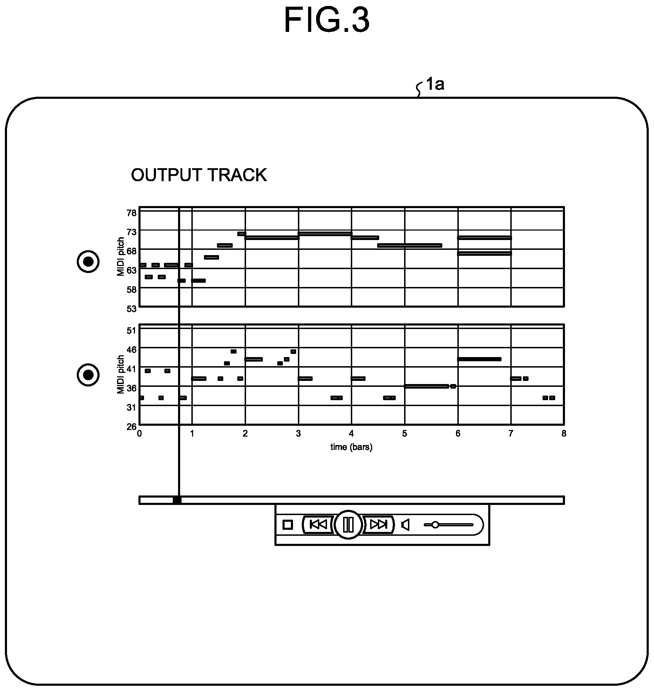

FIG. 3 is a diagram illustrating an example of an output screen. In this example, information visualizing an output track is displayed. The output track is a track set (multi-track) including a plurality of tracks, and includes two tracks in the example illustrated in FIG. 3. The first track is a track illustrated on the lower side in the drawing, and is the same track as the input track (FIG. 2) or a track in which a part of the input track has been changed. The second track is a track illustrated on the upper side in the drawing, and is a track newly generated to indicate the sound information of the second musical instrument at each time during the certain period. In this example, the first track and the second track are displayed in a selectable and reproducible mode. The two tracks may be reproduced simultaneously. A track having increased consistency with the first track is generated as the second track according to a principle described later. Such a first track and a second track constitute a consonant sound with each other, and are suitable for simultaneous reproduction.

Note that FIGS. 1 to 3 described above are merely examples of the appearance of the information processing device 1 and the configuration of the input-output screen, and various other configurations may be employed.

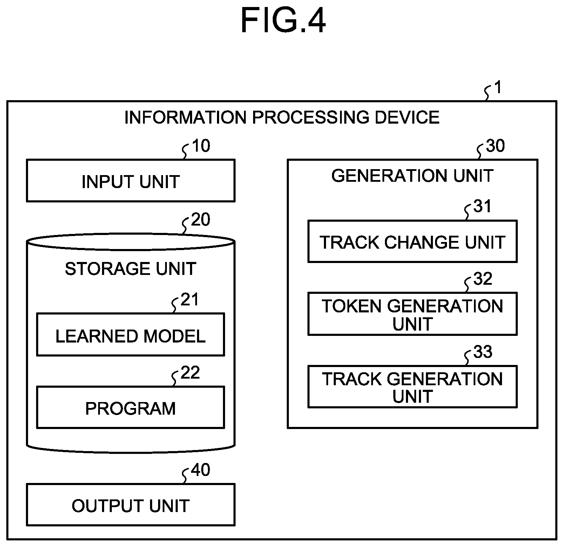

FIG. 4 is a diagram illustrating an example of functional blocks of the information processing device 1. The information processing device 1 includes an input unit 10, a storage unit 20, a generation unit 30, and an output unit 40.

An input track is input to the input unit 10. For example, as described above with reference to FIG. 2, the input unit 10 receives the input track selected by the user U. A selection of whether or not to make a change to the input track, or the like, and a selection of a musical instrument to be used for the track to be generated may also be input.

The storage unit 20 stores various types of information used in the information processing device 1. Among them, FIG. 4 illustrates a learned model 21 and a program 22. The learned model 21 is a learned model generated by using the training data so as to output the output data corresponding to the output track when input data corresponding to the first track is input. Details of the learned model 21 will be described later again. The program 22 is a program (software) for implementing processing executed in the information processing device 1.

The generation unit 30 generates an output track by using the input track input to the input unit 10 and the learned model 21. In FIG. 4, functional blocks that execute representative processing by the generation unit 30 are exemplified as a track change unit 31, a token generation unit 32, and a track generation unit 33.

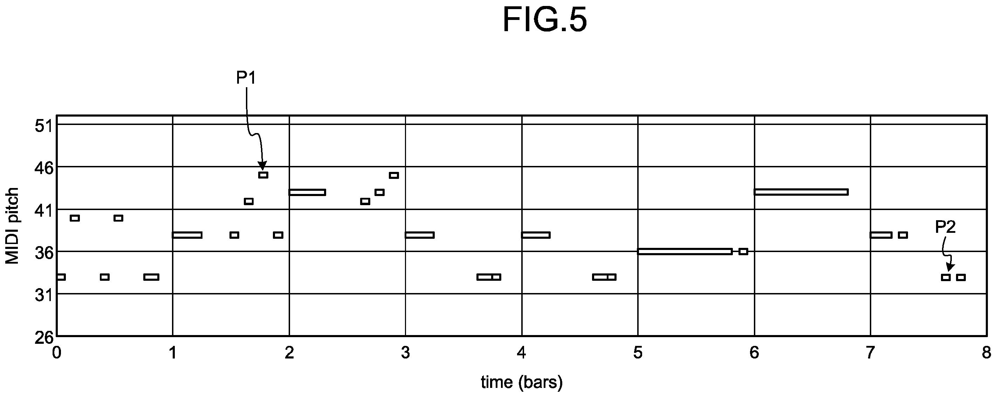

The track change unit 31 makes a change to the input track. The input track after the change is one mode of the first track. For example, the track change unit 31 changes a part of a plurality of pieces of sound information (a pitch value of sound, a generation period of sound, and the like of the first musical instrument) included in the input track. This will be described with reference to FIGS. 5 to 7.

FIGS. 5 to 7 are diagrams illustrating examples of the first track. The horizontal axis represents time (in this example, time (bars)), and the vertical axis represents a pitch value (in this example, MIDI pitch value). Note that bars indicates bar numbers, which are treated as units of time in the following.

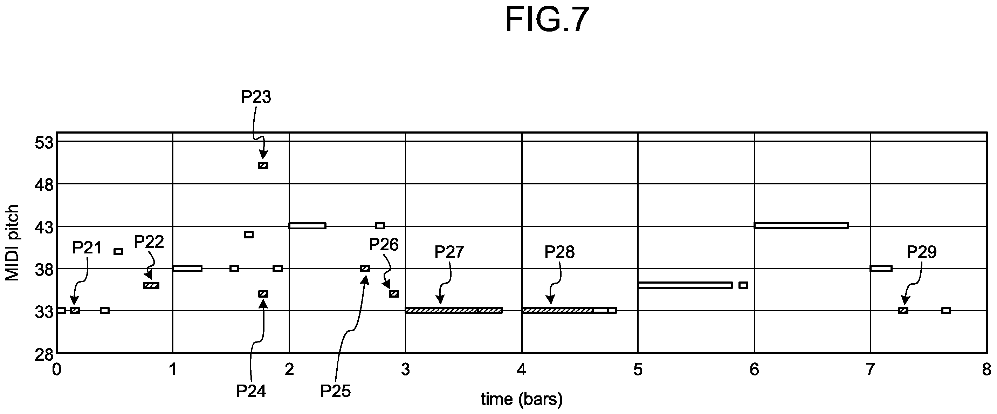

The first track illustrated in FIG. 5 is the same track as the input track. That is, this track is the input track input to the input unit 10. This track that is not changed by the track change unit 31 is also one mode of the first track. In order to compare with FIG. 7 described later, two sounds in FIG. 5 are denoted by reference numerals of a sound P1 and a sound P2.

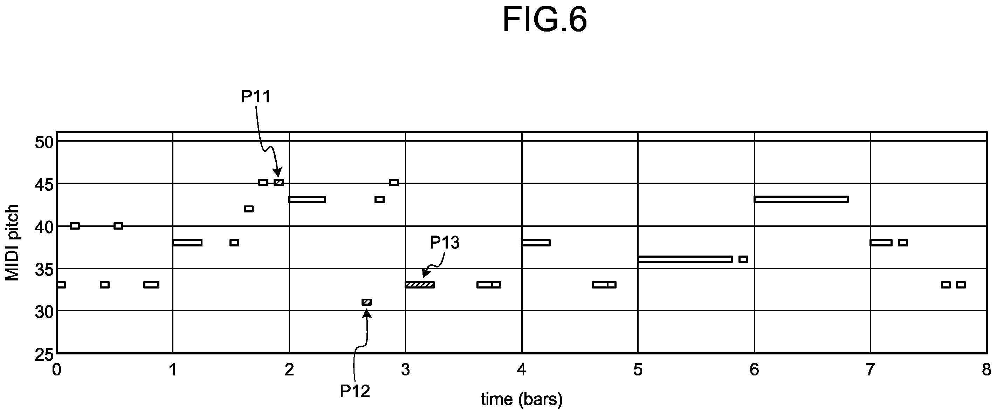

The first track illustrated in FIG. 6 is different from the input track (FIG. 5) in including a sound P11 to a sound P13. The sound P11 to sound P13 are sounds in which changes are made to the corresponding sounds of the input track. The sound P11 and the sound P13 are changed so that the sounds become higher (the pitch values become higher). The degree of change may vary between sounds. The sound P12 is changed so that the sound becomes lower (the pitch value becomes smaller). As another modification mode, a corresponding sound of the input track may be deleted (masked such that information is missing), and the sound P11 to sound P13 may be added. Corresponding sounds of the input track may be replaced with the sound P11 to sound P13.

The first track illustrated in FIG. 7 is different from the input track illustrated in the input track (FIG. 5) in including a sound P21 to a sound P29. The sound P21 to sound P28 are sounds in which changes are made to corresponding sounds of the input track. The sound P29 is a newly added sound. The sound P21, the sound P25, and the sound P26 are changed so as to be low. The degree of change may vary between sounds. The sound P22 is changed so that the sound becomes higher. The sound P23 and the sound P24 are sounds obtained by dividing the sound P1 of the input track into the sound P23 changed so that the sound becomes higher and the sound P24 changed so that the sound becomes lower. The sound P27 and the sound P28 are changed so that the sound becomes lower and the generation period becomes longer. As another modification mode, the corresponding sound of the input track may be deleted (masked), and the sounds P21 to P28 may be added. The ratio of the sounds P21 to P29 to the total sound in FIG. 7 is larger than the ratio of the sounds P11 to P13 to the total sound in FIG. 6 described above.

With the track change unit 31, a track partially different from the input track is obtained as the first track without being constrained by the input track input to the input unit 10. The degree of constraint (constraint strength) can be adjusted by the ratio of the sound to be changed. The adjustment amount is determined randomly, for example.

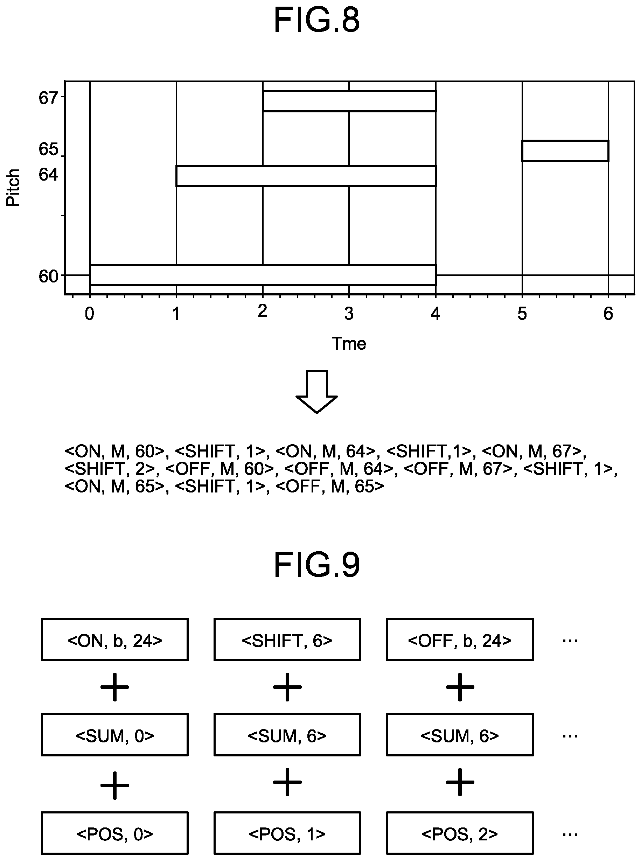

Returning to FIG. 4, the token generation unit 32 generates a token sequence on the basis of the first track. In an embodiment, the token generation unit 32 generates the token sequence by arranging a first token and a second token in time order. The first token is a token indicating generation and stop of each sound included in the first track. The second token is a token indicating a period during which the state indicated by the first token corresponding is maintained. An example of generating the token sequence will be described with reference to FIG. 8.

FIG. 8 is a diagram illustrating an example of a correspondence relationship between an input token and the token sequence. From the input token illustrated on the upper side in the drawing, the token sequence illustrated on the lower side in the drawing is generated. In the token sequence, a portion represented by angle brackets < > corresponds to one token.

A token <ON, M, 60> is a token (first token) indicating that the generation of a sound at the pitch value 60 of a musical instrument M starts at time 0. The following token <SHIFT, 1> is a token (second token corresponding) indicating that the state (musical instrument M and pitch value 60) indicated in the first token corresponding is maintained for a period of one unit of time. That is, SHIFT means that only the time moves (only time passes) while the state indicated by the immediately preceding token remains.

A token <ON, M, 64> is a token (first token) indicating that the generation of a sound at the pitch value 64 of the musical instrument M starts. The next token <SHIFT, 1> is a token (second token corresponding) indicating that the state (musical instrument M, pitch value 60, musical instrument M, and pitch value 64) indicated in the first token corresponding is maintained for a period of one unit of time.

A token <ON, M, 67> is a token (first token) indicating that the generation of a sound at the pitch value 67 of the musical instrument M starts. The following token <SHIFT, 2> is a token (second token corresponding) indicating that the state (musical instrument M, pitch value 60, musical instrument M, pitch value 64, musical instrument M, and pitch value 67) indicated in the first token corresponding is maintained for a period of two units of time.

The token <OFF, M, 60> is a token (first token) indicating that the generation of the sound at the pitch value 60 of the musical instrument M ends. The token <OFF, M, 64> is a token (first token) indicating that the generation of the sound at the pitch value 64 of the musical instrument M ends. The token <OFF, M, 67> is a token (first token) indicating that the generation of the sound at the pitch value 67 of the musical instrument M ends. The following token <SHIFT, 1> is a token (second token corresponding) indicating that the state indicated in the first token corresponding (no sound is generated by any musical instrument) is maintained for a period of one unit of time.

A token <ON, M, 65> is a token (first token) indicating that the generation of sound at the pitch value 65 of the musical instrument M starts. The following token <SHIFT, 1> is a token (second token corresponding) indicating that the state (musical instrument M and pitch value 65) indicated in the first token corresponding is maintained for a period of one unit of time.

The token <OFF, M, 65> indicates that the generation of the sound at the pitch value 65 of the musical instrument M ends (first token).

Note that, in the above description, an example has been described in which, when there is a plurality of sounds at the same time, tokens corresponding to low sounds are arranged in order. By determining the order in this manner, the learned model 21 can be easily learned.

Using the token sequence generated as described above (the token sequence illustrated on the lower side in FIG. 8) as a basic token sequence, the token generation unit 32 further adds (embeds) a token. As an example of the additional token, a first additional token and a second additional token will be described.

The first additional token is a token indicating a period that elapses until a time when each token appears in the token sequence. The token generation unit 32 may include (embed), in each token, a token indicating the total of the periods indicated by the second token until a time when each token appears in the token sequence. As described above, since the SHIFT of the second token means that only the time moves while the state indicated by the immediately preceding token remains, the embedding of the first additional token can also be referred to as time shift summarization embedding (TSE).

The second additional token is a token indicating a position of each token in the token sequence. The token generation unit 32 may include (may embed), in each token, a token indicating the position of the each token in the token sequence. The embedding of the second additional token can also be referred to as position embedding (PE).

An example of embedding of the above-described additional token (the first additional token and the second additional token) will be described with reference to FIG. 9.

FIG. 9 is a diagram illustrating an example of an additional token. In this example, the token <ON, b, 24>, the token <SHIFT, 6>, and the token <OFF, b, 24> are exemplified as the basic token. These indicate that generation of a sound at the pitch value 24 of a musical instrument b starts at time 0 and stops after the generation of the sound is maintained for a period of six unit hours.

Examples of the first additional token corresponding to each of the above-described basic tokens include a token <SUM, 0>, a token <SUM, 6>, and a token <SUM, 6>. The token <SUM, 0> indicates that the period that elapses until a time when the token <ON, b, 24> appears is zero. The token <SUM, 6> indicates that the period that elapses until a time when the token <SHIFT, 6> and the token <OFF, b, 24> appear is six units of time.

Examples of the second additional token corresponding to each of the above-described basic tokens include a token <POS, 0>, a token <POS, 1>, and a token <POS, 2>. The token <POS, 0> indicates that the token <ON, b, 24> is at the zeroth position in the token sequence. The token <POS, 1> indicates that the token <SHIFT, 6> is at the first position in the token sequence. The token <POS, 2> indicates that the token <OFF, b, 24> is at the second position in the token sequence.

As described above, by including the additional token in addition to the basic token, a lot of information is given to the token sequence. The actual time information corresponding to the basic token can be included in the token sequence, in particular by embedding (TSE) the first additional token. Thus, it is possible to bypass the learning regarding the time in the generation of the learned model 21 and reduce the processing load regarding the learning.

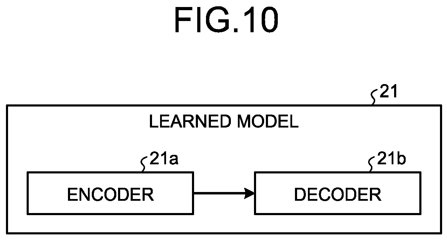

Returning to FIG. 4, the track generation unit 33 generates an output track. Specifically, the track generation unit 33 generates the output track using the input track and the learned model 21. An example of generation of the output track using the learned model 21 will be described with reference to FIG. 10.

FIG. 10 is a diagram illustrating an example of functional blocks of the learned model. In this example, the learned model 21 includes an encoder 21a and a decoder 21b. An example of the learned model 21 having such a configuration is Sequence to Sequence (Seq2Seq) or the like, and a Recurrent Neural Network (RNN) or a Transformer can be used as an architecture.

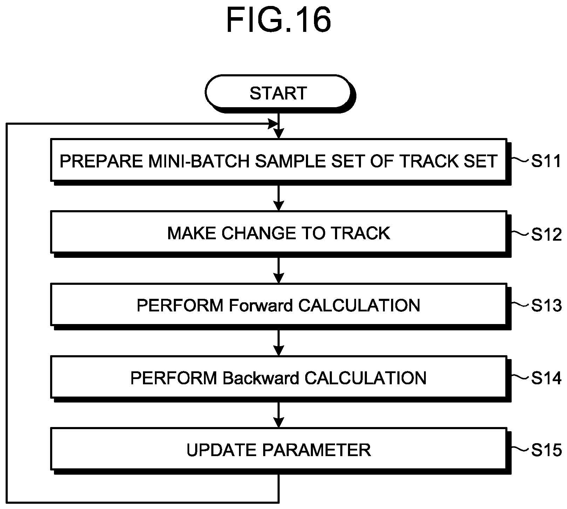

The encoder 21a extracts a feature amount from an input token sequence. The decoder 21b generates (reconfigures) an output token sequence from the feature amount extracted by the encoder 21a by using, for example, the token sequence with the highest probability. Learning of the encoder 21a may be performed by unsupervised learning such as variational auto encoder (VAE) or generative adversarial networks (GAN). The parameters of the encoder 21a and the decoder 21b are adjusted by comparing the input token sequence in the encoder 21a with the output token sequence generated by the decoder 21b. By repeating the adjustment, the learned model 21 in which the parameters of the encoder 21a and the decoder 21b are optimized is generated. An example of a generation flow of the learned model 21 will be described later again with reference to FIG. 16.

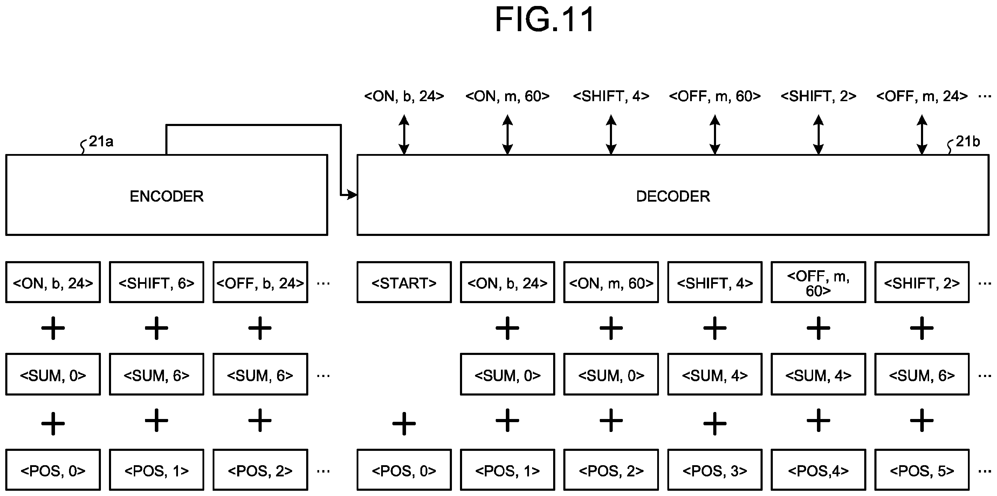

FIG. 11 is a diagram illustrating an example of an outline of token sequence generation by the learned model. A token sequence illustrated below the encoder 21a in the drawing is the input token sequence input to the encoder 21a, and corresponds to the first track (input track or changed track). A token sequence illustrated above the decoder 21b is the output token sequence generated (reconfigured) by the learned model 21 and corresponds to the output track. As illustrated, the output token sequence includes a token for a musical instrument m in addition to the token for the musical instrument b included in the input token sequence. That is, the token sequence corresponding to a track set including not only the first track using the musical instrument b (first musical instrument) but also the new track using the musical instrument m (corresponding to the second musical instrument) is generated as the output token sequence.

By generating the token sequence corresponding to the track set of the first track and the second track as described above, for example, the token sequence of the second track having increased consistency with a first track set (that is, with the input track) is increased more than in a case where the token sequence corresponding only to the second track is generated. The music generation in consideration of the consistency with such a first track set has high affinity with the human music generation process, and a synergistic effect of creativity is easily exhibited. The music generation process of human with high affinity is, for example, a process of creating tracks one by one or creating music by being inspired by a certain track.

In the embodiment, the decoder 21b of the learned model 21 may generate each token in time order. In this case, in the process of generating the token sequence, the decoder 21b may generate the next token with reference to the generated token (attention function).

For example, as illustrated below the decoder 21b in the drawing, after the start token <START>, a token <ON, b, 24>, a token <ON, m, 60>, a token <SHIFT, 4>, a token <OFF, m, 60>, and a token <SHIFT, 2> are sequentially generated as basic tokens. At that time, the decoder 21b also generates (does not need to output) the additional token described above. In particular, by generating the first additional token, the decoder 21b becomes capable of generating the next token while also referring to the token at the corresponding time in the input token sequence. Consequently, in the output track, the consistency between the new track using the musical instrument m and the first track using the musical instrument b is further improved.

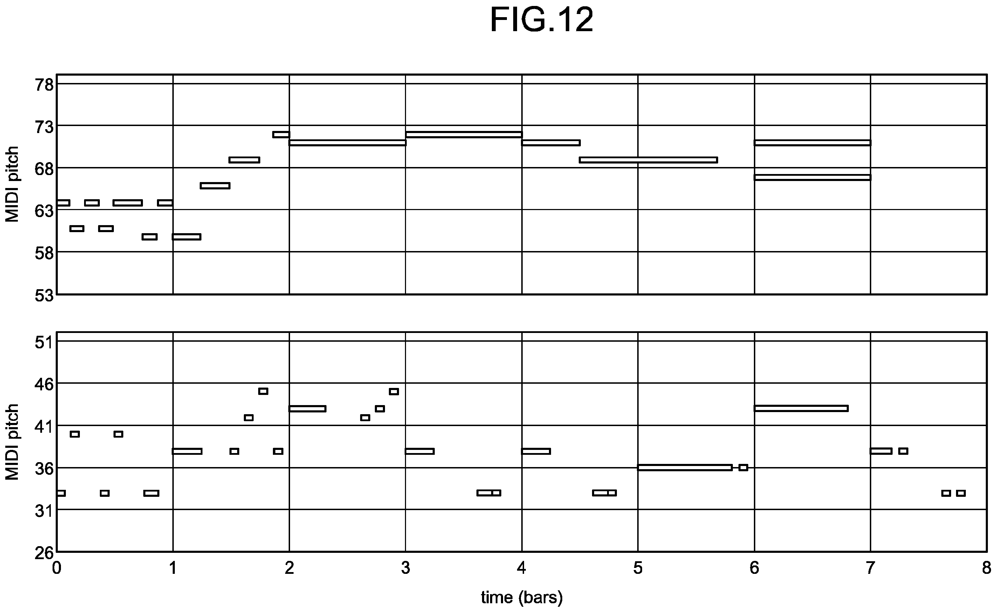

For example, the track generation unit 33 generates the output track by using the token sequence generated by the learned model 21 as described above. Some examples of output tracks will be described with reference to FIGS. 12 to 14.

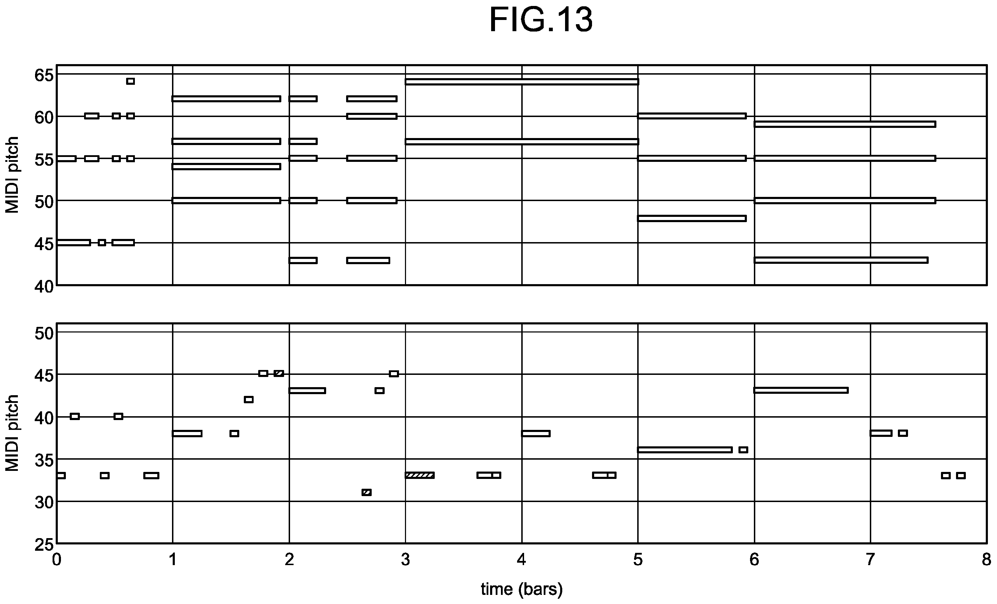

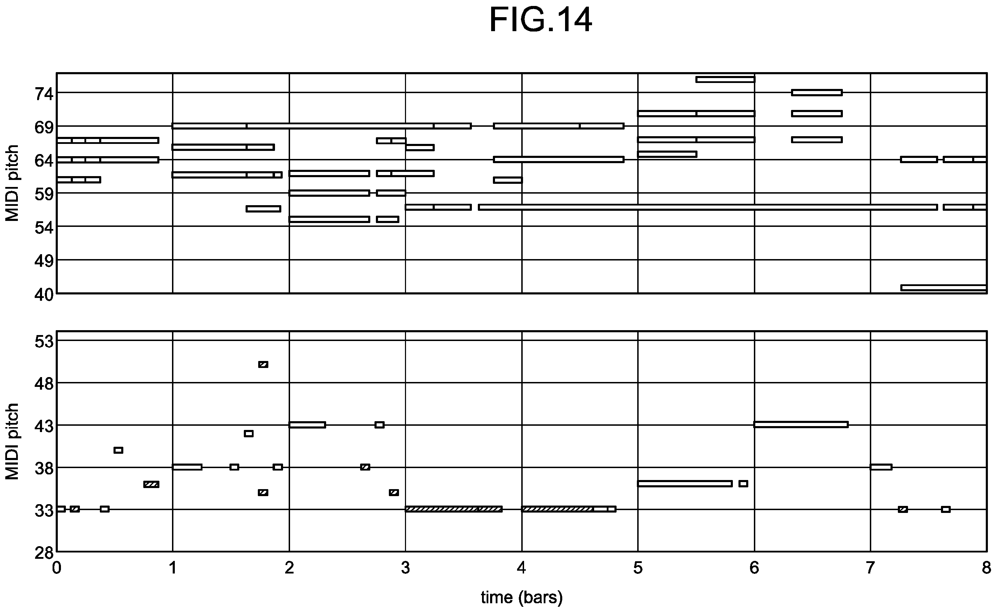

FIGS. 12 to 14 are diagrams illustrating examples of output tracks. The track illustrated on the lower side in the drawing is the first track (input track or changed track) illustrated in FIGS. 5 to 7 described above, and indicates the sound of the first musical instrument. The track illustrated on the upper side in the drawing is a second track newly generated on the basis of the first track, and indicates the sound of the second musical instrument. As can be understood from these drawings, different output tracks are obtained in a case where the input track is used as it is as the first track (FIG. 12) and in a case where a change is made (FIGS. 13 and 14). In either case, as described above, the track set of the first track and the second track is generated as the output track, so that the second track having increased consistency with the first track is obtained.

Returning to FIG. 4, the output unit 40 outputs the track generated by the generation unit 30. For example, as described above with reference to FIG. 3, the output track is displayed.

### 1.2 Example of Processing (Information Processing Method) Executed in Information Processing Device

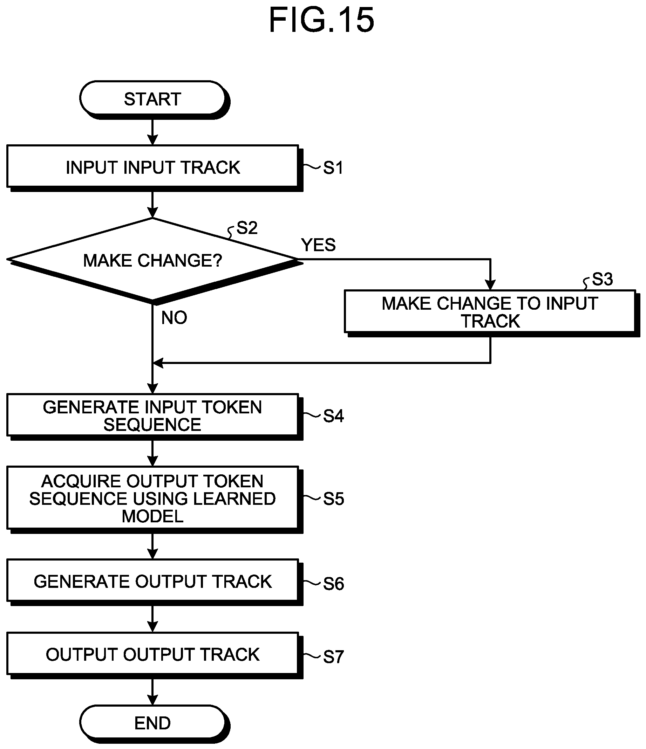

FIG. 15 is a flowchart illustrating an example of processing (information processing method) executed in the information processing device.

In Step S1, an input track is input. For example, the user U1 selects the input track as described above with reference to FIG. 2. The input unit 10 receives the input track. A selection of whether or not to make a change to the input track, or the like, and a selection of the musical instrument to be used for the track (second track) to be generated may also be input.

In Step S2, it is determined whether or not to make a change. This determination is performed, for example, on the basis of an input result of the previous Step S1 (selection of whether or not to make a change to the input track, or the like). When a change is made (Step S2: Yes), the processing proceeds to Step S3. Otherwise (Step S2: No), the processing proceeds to Step S4.

In Step S3, a change is made to the input track. For example, the track change unit 31 makes a change to the input track input in the previous Step S1. The specific contents of the change have been described above with reference to FIGS. 6 and 7 and the like, and thus the description thereof will not be repeated here.

In Step S4, the input token sequence is generated. For example, the token generation unit 32 generates an input token sequence corresponding to the input track that has been input in the previous Step S1 and/or the input track (first track) to which a change has been made in the previous Step S3. The specific content of the generation has been described above with reference to FIGS. 8 and 9 and the like, and thus the description will not be repeated here.

In Step S5, the output token sequence is acquired using the learned model. For example, the track generation unit 33 acquires the output token sequence corresponding to the output track by inputting the input token sequence generated in the previous Step S4 to the learned model 21. The specific content of the acquisition has been described above with reference to FIG. 11 and the like, and the description will not be repeated here.

In Step S6, the output track is generated. For example, the track generation unit 33 generates an output track corresponding to the output token sequence acquired in the previous Step S4.

In Step S7, the output track is output. For example, the output unit 40 outputs the output track generated in Step S6 as described above with reference to FIG. 3.

After the processing of Step S7 is completed, the processing of the flowchart ends. For example, by such processing, an output track is generated and output from the input track.

### 1.3 Example of Generation of Learned Model

FIG. 16 is a flowchart illustrating an example of generation of the learned model. In this example, learning using a mini-batch sample set is performed.

In Step S11, a mini-batch sample set of a track set (corresponding to an output track) is prepared. Each mini-batch sample is configured by combining, for example, part of mini data of a plurality of pieces of music prepared in advance. By collecting a plurality (for example, 256) of such mini-batch samples, a mini-batch sample set is obtained. One mini-batch sample of the mini-batch sample set is used in one flow. Another mini-batch sample is used in another flow.

In Step S12, a change is made to the track. Since the change is as described above, the description thereof will not be repeated. The number of track sets may be increased by the change.

In Step S13, Forward calculation is performed. Specifically, the token sequence corresponding to part of tracks (corresponding to the first track) of the track set prepared in Step S12 described above is input to a neural network including the encoder and the decoder, and the token sequence corresponding to the new track set (corresponding to the first track set and the second track set) is output. An error function is obtained from the output track set and the previously prepared track set.

In Step S14, Backward calculation is performed. Specifically, a cross entropy error is calculated from the error function obtained in Step S13 described above. From the calculated cross entropy error, a parameter error of the neural network and a gradient of the error are obtained.

In Step S15, the parameter is updated. Specifically, the parameters of the neural network are updated according to the error obtained in Step S14 described above.

After the processing of Step S15 is completed, the processing returns to Step S11 again. In Step S11 in that case, a mini-batch sample different from the previously used mini-batch sample is used.

For example, the learned model can be generated as described above. The above is an example, and various known learning methods may be used in addition to the method using the mini-batch sample set as described above.

### 1.4 Example of Hardware Configuration

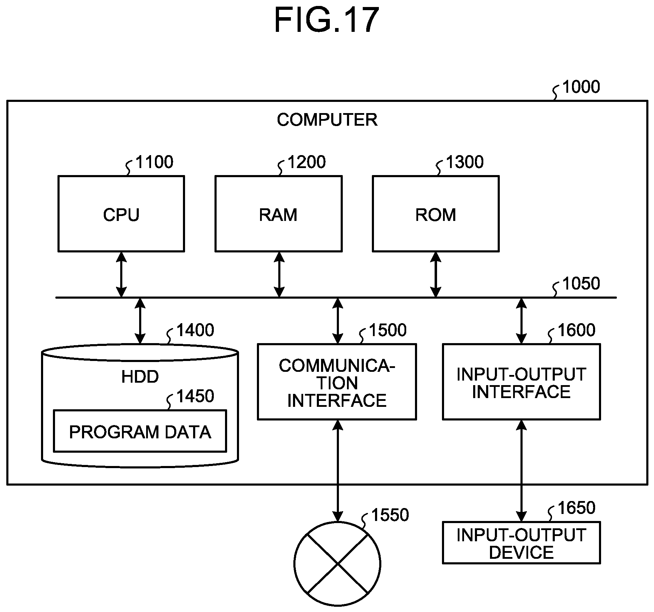

FIG. 17 is a diagram illustrating an example of a hardware configuration of the information processing device. In this example, the information processing device 1 is implemented by a computer 1000. The computer 1000 includes a CPU 1100, a RAM 1200, a read only memory (ROM) 1300, a hard disk drive (HDD) 1400, a communication interface 1500, and an input-output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by such a program, and the like. Specifically, the HDD 1400 is a recording medium that records an information processing program according to the present disclosure as an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input-output interface 1600 is an interface for connecting an input-output device 1650 and the computer 1000. For example, the CPU 1100 receives data from an input device such as a keyboard and a mouse via the input-output interface 1600. Further, the CPU 1100 transmits data to an output device such as a display, a speaker, or a printer via the input-output interface 1600. Furthermore, the input-output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 1, the CPU 1100 of the computer 1000 implements the functions of the generation unit 30 and the like by executing the information processing program loaded on the RAM 1200. Further, the HDD 1400 stores a program according to the present disclosure (the program 22 of the storage unit 20) and data in the storage unit 20. Note that the CPU 1100 reads the program data 1450 from the HDD 1400 and executes the program data 1450, but as another example, these programs may be acquired from another device via the external network 1550.

### 2. Modification Example

The embodiment of the present disclosure has been described above. The present disclosure is not limited to the above embodiment.

In the above embodiment, an example in which the input track includes one track and the output track includes two tracks has been described. However, the input track may include two or more tracks. The output track may include three or more tracks. An input-output mode (an input screen or the like in FIG. 2) of the information processing device 1 is also appropriately changed according to an increase in the number of tracks.

In the above embodiment, the example in which the learned model is a model including an encoder and a decoder such as RNN and Seq2Seq has been described. However, not limited to these models, various learned models capable of reconfiguring a token sequence from the input token sequence may be used.

In the above embodiment, the case where the track is music and the information element is sound information has been described. However, various tracks including information elements other than sound information may be used. For example, the track may be a sentence, and the information element may be a word or the like. In this case, a plurality of first information elements is words and the like of a first language provided over a certain section, and the input track indicates a word or the like of the first language at each position in the certain section. A plurality of second information elements is words and the like of a second language provided over a certain section, and the second track indicates a word or the like of the second language at each position in the certain section. In terms of tokens, the first token indicates the occurrence and stop of each word or the like. The second token indicates a section (for example, a length of a word or the like) in which the state indicated by the first token corresponding is maintained. The token generation unit 32 generates a token sequence by arranging the first token and the second token in position order in the certain section. The first additional token is a token indicating a section that elapses until a time when each token appears in the token sequence. The second token is a token indicating a position of each token in the token sequence.

Part of the functions of the information processing device 1 may be implemented outside the information processing device 1 (for example, an external server). In that case, the information processing device 1 may include part or all of the functions of the storage unit 20 and the generation unit 30 in the external server. By the information processing device 1 communicating with the external server, the processing of the information processing device 1 described above is similarly implemented.

### 3. Effects

The information processing method described above is specified as follows, for example. As described with reference to FIG. 5 and FIGS. 10 to 15 and the like, the information processing method generates the output track using the input track and the learned model 21 (Step S6). As described with reference to FIG. 5 and the like, the input track includes a plurality of first information elements provided over a certain period or a certain section. The output track includes a first track (a track identical to or changed with the input track) and a plurality of second information elements provided over the certain period or the certain section. For example, the plurality of first information elements is sound information of a first musical instrument provided over the certain period, and the input track indicates sound information of the first musical instrument at each time during the certain period. The plurality of second information elements is sound information of a second musical instrument provided over the certain period, and the second track indicates the sound information of the second musical instrument at each time during the certain period. The input track indicates the word of the first language at each position in the certain section. The second track included in the output track indicates the word of the second language at each position in the certain section. The learned model 21 is a learned model generated by using the training data so as to output the output data corresponding to the output track when input data corresponding to the first track is input.

According to the information processing method described above, the track set of the first track and the second track is generated as the output track. Thus, for example, it is possible to generate the second track having increased consistency with the consistency with the first track set (that is, with the input track) is increased more than in a case where only the second track is output and generated. The music generation in consideration of the consistency with such a first track set has high affinity with the human music generation process, and the synergistic effect of creativity is easily exhibited.

In a case where the first track is a track in which a part of the input track has been changed as described with reference to FIGS. 6 and 7 and the like, the information processing method may generate the first track by changing a part of the plurality of first information elements (for example, sounds of the first musical instrument) included in the input track (Step S3). Thus, it is possible to obtain an output track different from that in a case where the input track is used as it is as the first track without being constrained by the input track.

As described with reference to FIGS. 8 to 11 and the like, the input data may be an input token sequence corresponding to the first track, and the output data may be an output token sequence corresponding to the output track. The information processing method may acquire the output token sequence by inputting the input token sequence to the learned model 21 (Step S5). The information processing method may generate an input token sequence by arranging the first token and the second token in time order in the certain period or in position order in the certain section (Step S4). The first token indicates generation and stop of each of the plurality of first information elements (sounds of the first musical instrument). The second token indicates a period or section in which a state indicated by the first token corresponding is maintained. For example, such a token sequence can be generated and a learned model can be used.

As described with reference to FIGS. 9 to 11 and the like, the information processing method may generate the input token sequence by including, in the first token and the second token, an additional token indicating the time or the position when each of the first token and the second token appears in the input token sequence. The additional token may be a token indicating a sum of periods or sections indicated in the second token until a time when each of the first token and the second token appears in the input token sequence. Thus, since the information of the time or the position can be included in the token sequence, for example, it is possible to bypass the learning regarding the time or the position in the generation of the learned model 21 and reduce the processing load regarding the learning.

As described with reference to FIGS. 5 to 7 and the like, the sound information of the first musical instrument may include a pitch value of sound and/or a generation period of sound of the first musical instrument. For example, the first track can be obtained by changing such sound information of the first musical instrument (Step S3).

The information processing device 1 described with reference to FIGS. 1 to 4 and the like is also one aspect of the present disclosure. That is, the information processing device 1 includes the generation unit 30 that generates an output track by using the above-described input track and the learned model 21. The information processing device 1 can also generate the second track having increased consistency with the input track as described above.

The program 22 described with reference to FIGS. 4 and 17 and the like is also one aspect of the present disclosure. That is, the program 22 is a program for causing a computer to function, and causes the computer to generate an output track using the above-described input track and the learned model 21. The program 22 can also generate the second track having increased consistency with the input track as described above.

Note that the effects described in the present disclosure are merely examples and are not limited to the disclosed contents. There may be other effects.

Components of different embodiments and modification examples may be appropriately combined without departing from the scope of the present disclosure as defined by the appended claims.

### Reference Signs List

- 1: INFORMATION PROCESSING DEVICE
- 1a: DISPLAY SCREEN
- 10: INPUT UNIT
- 20: STORAGE UNIT
- 21: LEARNED MODEL
- 21a: ENCODER
- 21b: DECODER
- 22: PROGRAM
- 30: GENERATION UNIT
- 31: TRACK CHANGE UNIT
- 32: TOKEN GENERATION UNIT
- 33: TRACK GENERATION UNIT
- 40: OUTPUT UNIT

## Claims

1. An information processing method comprising
generating an output track (S6) by using an input track including a plurality of first information elements provided over a certain period or a certain section and a learned model (21), wherein
the plurality of first information elements is sound information of a first musical instrument provided over the certain period, and the input track indicates sound information of the first musical instrument at each time during the certain period, and wherein
the output track includes a first track that is a same track as the input track or a changed track, and a second track including a plurality of second information elements provided over the certain period or the certain section, and wherein
the plurality of second information elements is sound information of a second musical instrument provided over the certain period, and the second track indicates sound information of the second musical instrument at each time during the certain period, and
the learned model (21) is a learned model generated by using training data so as to output output data corresponding to the output track when input data corresponding to the first track is input, wherein
the input data is an input token sequence corresponding to the first track, the output data is an output token sequence corresponding to the output track, and
the information processing method acquires the output token sequence by generating the input token sequence and inputting the input token sequence to the learned model (21), wherein
the input token sequence is generated by arranging a first token indicating generation and stop of each of the plurality of first information elements and a second token indicating a period or section in which a state indicated by the corresponding first token is maintained in time order in the certain period or in position order in the certain section, and wherein
the input token sequence is generated by including, in the first token and the second token, an additional token indicating a time or a position when each of the first token and the second token appears in the input token sequence.

2. The information processing method according to claim 1, wherein
the first track is a track in which a part of the input track has been changed, and
the information processing method generates the first track by changing a part of the plurality of first information elements included in the input track.

3. The information processing method according to claim 1, wherein
the additional token is a token indicating a sum of periods or sections indicated in the second token until a time when each of the first token and the second token appears in the input token sequence.

4. The information processing method according to claim 1, wherein
the sound information of the first musical instrument includes at least one of a pitch value of sound and a generation period of sound of the first musical instrument.

5. An information processing device (1) comprising
a generation unit (30) that generates an output track by using an input track including a plurality of first information elements provided over a certain period or a certain section and a learned model (21), wherein
the plurality of first information elements is sound information of a first musical instrument provided over the certain period, and the input track indicates sound information of the first musical instrument at each time during the certain period, and wherein
the output track includes a first track that is a same track as the input track or a track in which a part of the input track has been changed, and a second track including a plurality of second information elements provided over the certain period or the certain section, and wherein
the plurality of second information elements is sound information of a second musical instrument provided over the certain period, and the second track indicates sound information of the second musical instrument at each time during the certain period, and
the learned model (21) is a learned model generated by using training data so as to output output data corresponding to the output track when input data corresponding to the first track is input, wherein
the input data is an input token sequence corresponding to the first track, the output data is an output token sequence corresponding to the output track, and
the information processing device is configured to acquire the output token sequence by generating the input token sequence and inputting the input token sequence to the learned model (21), wherein
the input token sequence is generated by arranging a first token indicating generation and stop of each of the plurality of first information elements and a second token indicating a period or section in which a state indicated by the corresponding first token is maintained in time order in the certain period or in position order in the certain section, and wherein
the input token sequence is generated by including, in the first token and the second token, an additional token indicating a time or a position when each of the first token and the second token appears in the input token sequence.

6. A computer-readable storage medium, comprising instructions for causing a computer to function, the program causing the computer to execute
generating an output track (S6) by using an input track including a plurality of first information elements provided over a certain period or a certain section and a learned model (21), wherein
the plurality of first information elements is sound information of a first musical instrument provided over the certain period, and the input track indicates sound information of the first musical instrument at each time during the certain period, and wherein
the output track includes a first track that is a same track as the input track or a track in which a part of the input track has been changed, and a second track including a plurality of second information elements provided over the certain period or the certain section, and wherein
the plurality of second information elements is sound information of a second musical instrument provided over the certain period, and the second track indicates sound information of the second musical instrument at each time during the certain period, and
the learned model (21) is a learned model generated by using training data so as to output output data corresponding to the output track when input data corresponding to the first track is input, wherein
the input data is an input token sequence corresponding to the first track, the output data is an output token sequence corresponding to the output track, and
the information processing method acquires the output token sequence by generating the input token sequence and inputting the input token sequence to the learned model (21), wherein
the input token sequence is generated by arranging a first token indicating generation and stop of each of the plurality of first information elements and a second token indicating a period or section in which a state indicated by the corresponding first token is maintained in time order in the certain period or in position order in the certain section, and wherein
the input token sequence is generated by including, in the first token and the second token, an additional token indicating a time or a position when each of the first token and the second token appears in the input token sequence.

## Patentansprüche

1. Informationsverarbeitungsverfahren, umfassend
Erzeugen einer Ausgabespur (S6) durch Verwenden einer Eingabespur, die eine Vielzahl von ersten Informationselementen einschließt, die über eine gewisse Periode oder einen gewissen Abschnitt bereitgestellt sind, und eines gelernten Modells (21), wobei
die Vielzahl von ersten Informationselementen Klanginformationen eines ersten Musikinstruments sind, die über die gewisse Periode bereitgestellt werden, und die Eingabespur Klanginformationen des ersten Musikinstruments zu jeder Zeit während der gewissen Periode anzeigt und wobei
die Ausgabespur eine erste Spur, die eine gleiche Spur wie die Eingabespur oder eine veränderte Spur ist, und eine zweite Spur, die eine Vielzahl von zweiten Informationselementen einschließt, die über die gewisse Periode oder den gewissen Abschnitt bereitgestellt sind, einschließt und wobei
die Vielzahl von zweiten Informationselementen Klanginformationen eines zweiten Musikinstruments sind, die über die gewisse Periode bereitgestellt werden, und die zweite Spur Klanginformationen des zweiten Musikinstruments zu jeder Zeit während der gewissen Periode anzeigt und
das gelernte Modell (21) ein gelerntes Modell ist, das durch Verwenden von Trainingsdaten erzeugt wird, um Ausgabedaten auszugeben, die der Ausgabespur entsprechen, wenn Eingabedaten eingegeben werden, die der ersten Spur entsprechen, wobei
die Eingabedaten eine Eingabe-Token-Sequenz sind, die der ersten Spur entspricht, die Ausgabedaten eine Ausgabe-Token-Sequenz sind, die der Ausgabespur entspricht, und
das Informationsverarbeitungsverfahren die Ausgabe-Token-Sequenz durch das Erzeugen der Eingabe-Token-Sequenz und das Eingeben der Eingabe-Token-Sequenz in das gelernte Modell (21) erlangt, wobei
die Eingabe-Token-Sequenz durch ein Anordnen eines ersten Tokens, das eine Erzeugung und einen Stopp jedes der Vielzahl von ersten Informationselementen anzeigt, und eines zweiten Tokens, das eine Periode oder einen Abschnitt anzeigt, in der/dem ein Zustand, der durch das entsprechende erste Token angezeigt wird, in Zeitreihenfolge in der gewissen Periode oder in Positionsreihenfolge in dem gewissen Abschnitt aufrechterhalten wird, erzeugt wird und wobei
die Eingabe-Token-Sequenz durch das Einschließen, in dem ersten Token und dem zweiten Token, eines zusätzlichen Tokens erzeugt wird, das eine Zeit oder eine Position anzeigt, wenn jedes des ersten Tokens und des zweiten Tokens in der Eingabe-Token-Sequenz erscheint.

2. Informationsverarbeitungsverfahren nach Anspruch 1, wobei
die erste Spur eine Spur ist, in der ein Teil der Eingabespur verändert wurde, und
das Informationsverarbeitungsverfahren die erste Spur durch das Verändern eines Teils der Vielzahl von ersten Informationselementen erzeugt, die in der Eingabespur eingeschlossen sind.

3. Informationsverarbeitungsverfahren nach Anspruch 1, wobei
das zusätzliche Token ein Token ist, das eine Summe von Perioden oder Abschnitten anzeigt, die in dem zweiten Token angezeigt sind, bis zu einer Zeit, wenn jedes des ersten Tokens und des zweiten Tokens in der Eingabe-Token-Sequenz erscheint.

4. Informationsverarbeitungsverfahren nach Anspruch 1, wobei
die Klanginformationen des ersten Musikinstruments mindestens eines von einem Tonhöhenwert eines Klangs und einer Erzeugungsperiode des Klangs des ersten Musikinstruments einschließt.

5. Informationsverarbeitungsvorrichtung (1), umfassend
eine Erzeugungseinheit (30), die eine Ausgabespur durch Verwenden einer Eingabespur, die eine Vielzahl von ersten Informationselementen einschließt, die über eine gewisse Periode oder einen gewissen Abschnitt bereitgestellt sind, und ein gelerntes Modell (21) erzeugt, wobei
die Vielzahl von ersten Informationselementen Klanginformationen eines ersten Musikinstruments sind, die über die gewisse Periode bereitgestellt werden, und die Eingabespur Klanginformationen des ersten Musikinstruments zu jeder Zeit während der gewissen Periode anzeigt und wobei
die Ausgabespur eine erste Spur, die eine gleiche Spur wie die Eingabespur oder eine Spur, in der ein Teil der Eingabespur verändert wurde, ist, und eine zweite Spur, die eine Vielzahl von zweiten Informationselementen einschließt, die über die gewisse Periode oder den gewissen Abschnitt bereitgestellt sind, einschließt und wobei
die Vielzahl von zweiten Informationselementen Klanginformationen eines zweiten Musikinstruments sind, die über die gewisse Periode bereitgestellt werden, und die zweite Spur Klanginformationen des zweiten Musikinstruments zu jeder Zeit während der gewissen Periode anzeigt und
das gelernte Modell (21) ein gelerntes Modell ist, das durch Verwenden von Trainingsdaten erzeugt wird, um Ausgabedaten auszugeben, die der Ausgabespur entsprechen, wenn Eingabedaten eingegeben werden, die der ersten Spur entsprechen, wobei
die Eingabedaten eine Eingabe-Token-Sequenz sind, die der ersten Spur entspricht, die Ausgabedaten eine Ausgabe-Token-Sequenz sind, die der Ausgabespur entspricht, und
die Informationsverarbeitungsvorrichtung konfiguriert ist, um die Ausgabe-Token-Sequenz durch das Erzeugen der Eingabe-Token-Sequenz und das Eingeben der Eingabe-Token-Sequenz in das gelernte Modell (21) zu erlangen, wobei
die Eingabe-Token-Sequenz durch das Anordnen eines ersten Tokens, das die Erzeugung und den Stopp jedes der Vielzahl von ersten Informationselementen anzeigt, und eines zweiten Tokens, das eine Periode oder einen Abschnitt anzeigt, in der/dem ein Zustand, der durch das entsprechende erste Token angezeigt wird, in Zeitreihenfolge in der gewissen Periode oder in Positionsreihenfolge in dem gewissen Abschnitt aufrechterhalten wird, erzeugt wird und wobei
die Eingabe-Token-Sequenz durch das Einschließen, in dem ersten Token und dem zweiten Token, eines zusätzlichen Tokens erzeugt wird, das eine Zeit oder eine Position anzeigt, wenn jedes des ersten Tokens und des zweiten Tokens in der Eingabe-Token-Sequenz erscheint.

6. Computerlesbares Speichermedium, umfassend Anweisungen zum Veranlassen eines Computers, zu funktionieren, wobei das Programm den Computer veranlasst, auszuführen
Erzeugen einer Ausgabespur (S6) durch Verwenden einer Eingabespur, die eine Vielzahl von ersten Informationselementen einschließt, die über eine gewisse Periode oder einen gewissen Abschnitt bereitgestellt sind, und eines gelernten Modells (21), wobei
die Vielzahl von ersten Informationselementen Klanginformationen eines ersten Musikinstruments sind, die über die gewisse Periode bereitgestellt werden, und die Eingabespur Klanginformationen des ersten Musikinstruments zu jeder Zeit während der gewissen Periode anzeigt und wobei
die Ausgabespur eine erste Spur, die eine gleiche Spur wie die Eingabespur oder eine Spur, in der ein Teil der Eingabespur verändert wurde, ist, und eine zweite Spur, die eine Vielzahl von zweiten Informationselementen einschließt, die über die gewisse Periode oder den gewissen Abschnitt bereitgestellt sind, einschließt und wobei
die Vielzahl von zweiten Informationselementen Klanginformationen eines zweiten Musikinstruments sind, die über die gewisse Periode bereitgestellt werden, und die zweite Spur Klanginformationen des zweiten Musikinstruments zu jeder Zeit während der gewissen Periode anzeigt und
das gelernte Modell (21) ein gelerntes Modell ist, das durch Verwenden von Trainingsdaten erzeugt wird, um Ausgabedaten auszugeben, die der Ausgabespur entsprechen, wenn Eingabedaten eingegeben werden, die der ersten Spur entsprechen, wobei
die Eingabedaten eine Eingabe-Token-Sequenz sind, die der ersten Spur entspricht, die Ausgabedaten eine Ausgabe-Token-Sequenz sind, die der Ausgabespur entspricht, und
das Informationsverarbeitungsverfahren die Ausgabe-Token-Sequenz durch das Erzeugen der Eingabe-Token-Sequenz und das Eingeben der Eingabe-Token-Sequenz in das gelernte Modell (21) erlangt, wobei
die Eingabe-Token-Sequenz durch das Anordnen eines ersten Tokens, das die Erzeugung und den Stopp jedes der Vielzahl von ersten Informationselementen anzeigt, und eines zweiten Tokens, das eine Periode oder einen Abschnitt anzeigt, in der/dem ein Zustand, der durch das entsprechende erste Token angezeigt wird, in Zeitreihenfolge in der gewissen Periode oder in Positionsreihenfolge in dem gewissen Abschnitt aufrechterhalten wird, erzeugt wird und wobei
die Eingabe-Token-Sequenz durch das Einschließen, in dem ersten Token und dem zweiten Token, eines zusätzlichen Tokens erzeugt wird, das eine Zeit oder eine Position anzeigt, wenn jedes des ersten Tokens und des zweiten Tokens in der Eingabe-Token-Sequenz erscheint.

## Revendications

1. Procédé de traitement d'informations comprenant
la génération d'une piste de sortie (S6) à l'aide d'une piste d'entrée comportant une pluralité de premiers éléments d'informations fournis sur une certaine période ou une certaine section et un modèle appris (21), dans lequel
la pluralité de premiers éléments d'informations sont des informations sonores d'un premier instrument de musique fournies pendant la période donnée, et la piste d'entrée indique des informations sonores du premier instrument de musique à chaque moment pendant la période donnée, et dans lequel
la piste de sortie comporte une première piste qui est une même piste que la piste d'entrée ou une piste modifiée, et une seconde piste comporte une pluralité de seconds éléments d'informations fournis sur la période donnée ou la section donnée, et dans lequel
la pluralité de seconds éléments d'informations sont des informations sonores d'un second instrument de musique fournies au cours de la période donnée, et la seconde piste indique des informations sonores du second instrument de musique à chaque moment pendant la période donnée, et
le modèle appris (21) est un modèle appris généré par l'utilisation de données d'entraînement de manière à émettre des données de sortie correspondant à la piste de sortie lorsque des données d'entrée correspondant à la première piste sont entrées, dans lequel
les données d'entrée sont une séquence de jetons d'entrée correspondant à la première piste, les données de sortie sont une séquence de jetons de sortie correspondant à la piste de sortie, et
le procédé de traitement d'informations acquiert la séquence de jetons de sortie en générant la séquence de jetons d'entrée et en introduisant la séquence de jetons d'entrée dans le modèle appris (21), dans lequel
la séquence de jetons d'entrée est générée en agençant un premier jeton indiquant la génération et l'arrêt de chacun parmi la pluralité de premiers éléments d'informations et un second jeton indiquant une période ou une section dans laquelle un état indiqué par le premier jeton correspondant est maintenu dans l'ordre temporel dans la période donnée ou dans l'ordre de position dans la section donnée, et dans lequel
la séquence de jetons d'entrée est générée en incluant, dans le premier jeton et le second jeton, un jeton supplémentaire indiquant un moment ou une position où chacun du premier jeton et du second jeton apparaît dans la séquence de jetons d'entrée.

2. Procédé de traitement d'informations selon la revendication 1, dans lequel
la première piste est une piste dans laquelle une partie de la piste d'entrée a été modifiée, et
le procédé de traitement d'informations génère la première piste en modifiant une partie de la pluralité de premiers éléments d'informations inclus dans la piste d'entrée.

3. Procédé de traitement d'informations selon la revendication 1, dans lequel
le jeton supplémentaire est un jeton indiquant une somme de périodes ou de sections indiquées dans le second jeton jusqu'à un moment où chacun du premier jeton et du second jeton apparaît dans la séquence de jetons d'entrée.

4. Procédé de traitement d'informations selon la revendication 1, dans lequel
les informations sonores du premier instrument de musique comportent au moins l'une parmi une valeur de hauteur tonale du son et une période de génération du son du premier instrument de musique.

5. Dispositif de traitement d'informations (1) comprenant
une unité de génération (30) qui génère une piste de sortie à l'aide d'une piste d'entrée comportant une pluralité de premiers éléments d'informations fournis sur une certaine période ou une certaine section et un modèle appris (21), dans lequel
la pluralité de premiers éléments d'informations sont des informations sonores d'un premier instrument de musique fournies pendant la période donnée, et la piste d'entrée indique des informations sonores du premier instrument de musique à chaque moment pendant la période donnée, et dans lequel
la piste de sortie comporte une première piste qui est une même piste que la piste d'entrée ou une piste dans laquelle une partie de la piste d'entrée a été modifiée, et une seconde piste comportant une pluralité de seconds éléments d'informations fournis sur la période donnée ou la section donnée, et dans lequel
la pluralité de seconds éléments d'informations sont des informations sonores d'un second instrument de musique fournies au cours de la période donnée, et la seconde piste indique des informations sonores du second instrument de musique à chaque moment pendant la période donnée, et
le modèle appris (21) est un modèle appris généré par l'utilisation de données d'entraînement de manière à émettre des données de sortie correspondant à la piste de sortie lorsque des données d'entrée correspondant à la première piste sont entrées, dans lequel
les données d'entrée sont une séquence de jetons d'entrée correspondant à la première piste, les données de sortie sont une séquence de jetons de sortie correspondant à la piste de sortie, et
le dispositif de traitement d'informations est configuré pour acquérir la séquence de jetons de sortie en générant la séquence de jetons d'entrée et en introduisant la séquence de jetons d'entrée dans le modèle appris (21), dans lequel
la séquence de jetons d'entrée est générée en agençant un premier jeton indiquant la génération et l'arrêt de chacun parmi la pluralité de premiers éléments d'informations et un second jeton indiquant une période ou une section dans laquelle un état indiqué par le premier jeton correspondant est maintenu dans l'ordre temporel dans la période donnée ou dans l'ordre de position dans la section donnée, et dans lequel
la séquence de jetons d'entrée est générée en incluant, dans le premier jeton et le second jeton, un jeton supplémentaire indiquant un moment ou une position où chacun du premier jeton et du second jeton apparaît dans la séquence de jetons d'entrée.

6. Support de stockage lisible par un ordinateur, comprenant des instructions pour amener un ordinateur à fonctionner, le programme amenant l'ordinateur à exécuter
la génération d'une piste de sortie (S6) à l'aide d'une piste d'entrée comportant une pluralité de premiers éléments d'informations fournis sur une certaine période ou une certaine section et un modèle appris (21), dans lequel
la pluralité de premiers éléments d'informations sont des informations sonores d'un premier instrument de musique fournies pendant la période donnée, et la piste d'entrée indique des informations sonores du premier instrument de musique à chaque moment pendant la période donnée, et dans lequel
la piste de sortie comporte une première piste qui est une même piste que la piste d'entrée ou une piste dans laquelle une partie de la piste d'entrée a été modifiée, et une seconde piste comportant une pluralité de seconds éléments d'informations fournis sur la période donnée ou la section donnée, et dans lequel
la pluralité de seconds éléments d'informations sont des informations sonores d'un second instrument de musique fournies au cours de la période donnée, et la seconde piste indique des informations sonores du second instrument de musique à chaque moment pendant la période donnée, et
le modèle appris (21) est un modèle appris généré par l'utilisation de données d'entraînement de manière à émettre des données de sortie correspondant à la piste de sortie lorsque des données d'entrée correspondant à la première piste sont entrées, dans lequel
les données d'entrée sont une séquence de jetons d'entrée correspondant à la première piste, les données de sortie sont une séquence de jetons de sortie correspondant à la piste de sortie, et
le procédé de traitement d'informations acquiert la séquence de jetons de sortie en générant la séquence de jetons d'entrée et en introduisant la séquence de jetons d'entrée dans le modèle appris (21), dans lequel
la séquence de jetons d'entrée est générée en agençant un premier jeton indiquant la génération et l'arrêt de chacun parmi la pluralité de premiers éléments d'informations et un second jeton indiquant une période ou une section dans laquelle un état indiqué par le premier jeton correspondant est maintenu dans l'ordre temporel dans la période donnée ou dans l'ordre de position dans la section donnée, et dans lequel
la séquence de jetons d'entrée est générée en incluant, dans le premier jeton et le second jeton, un jeton supplémentaire indiquant un moment ou une position où chacun du premier jeton et du second jeton apparaît dans la séquence de jetons d'entrée.
